# FASCICULE DE BREVET EUROPEEN

(11) **EP 0 493 194 B1**
(45) Date de publication et mention de la délivrance du brevet: **09.03.1994**
(21) Numéro de dépôt: 91403432.7
(22) Date de dépôt: 17.12.1991
(51) Int. Cl.: B23K 35/02, B23K 35/40

(54) **Electrode de soudage par points**
Punktschweisselektrode
Spot welding electrode

(30) Priorité: 21.12.1990 FR 9016154
(43) Date de publication de la demande: 01.07.1992
(73) Titulaire: SOLLAC, 92072 Puteaux (FR)
(72) Inventeur: Bollinger, Etienne, F-59240 Dunkerque (FR); Gobez, Pascal, F-59240 Dunkerque (FR); Nowak, Jean-François, F-42000 Saint-Etienne (FR); Sanz, Germain, F-75016 Paris (FR)
(74) Mandataire: Lanceplaine, Jean-Claude

(56) Documents cités:
- EP-A- 0 383 060
- FR-A- 2 424 093
- PATENT ABSTRACTS OF JAPAN vol. 10, no. 88 (M-467)(2145) 5 April 1986 & JP-A-60 227 997 (SUMITOMO DENKI KOGYO) 13 November 1985
- PATENT ABSTRACTS OF JAPAN vol. 12, no. 218 (M-711)(3065) 22 June 1988 & JP-A-63 016 881 (SHIRAOKA YAKIN) 23 January 1988
- PATENT ABSTRACTS OF JAPAN vol. 13, no. 10 (M-782)(3358) 11 January 1989 & JP-A-63 220 985 (KYUSHU SEKISUI KOGYO) 14 September 1988

## Description

La présente invention concerne une électrode de soudage par résistance par points selon le préambule de la revendication 1 (voir EP-A-383 060).

Les tôles minces de 0,4 à 3mm d'épaisseur utilisées notamment dans l'industrie automobile ou l'électroménager sont généralement soudées entre elles par un procédé de soudage par résistance par points.

A cet effet, deux ou plusieurs pièces sont pressées par un effort déterminé entre deux organes d'amenée de courant qui sont le plus souvent constitués par des électrodes en cuivre ou en alliage de cuivre.

Au contact des pièces à souder, le courant électrique circule d'une électrode à l'autre en passant par lesdites pièces à souder.

Un échauffement se produit, par effet Joule, dans les pièces à souder insérées entre les deux électrodes, en particulier au niveau du contact entre les pièces à souder où la résistance ohmique est la plus faible.

Ce chauffage des pièces à souder au niveau de leur surface de contact permet de fondre le métal et de créer un point de soudure après coupure du courant et solidification du noyau fondu.

Les électrodes de soudage utilisées jusqu'à présent sont des électrodes à base de cuivre, généralement un alliage comportant 0,1% de zirconium, 1% de chrome et 98,9% de cuivre.

Dans le cas où l'on soude par points des pièces revêtues d'une couche de revêtement de zinc ou d'alliage de zinc, le zinc présent à l'interface pièce-électrode se liquéfie sous l'effet de la température atteinte par la surface de contact de l'électrode et s'allie au cuivre de l'électrode de soudage.

En effet, sous l'effet du courant électrique dont l'intensité est de 5 à 30 kA, on crée à l'interface pièce-pièce au niveau des électrodes une fusion du métal qui atteint alors plus de 1400°C.

Du fait de la convexion des calories de l'interface pièce-pièce, on atteint au niveau de l'interface pièce-électrode des températures de l'ordre de 800°C supérieure à la température de fusion du zinc.

Par conséquent, le zinc fond et se liquéfie pour s'allier au cuivre de l'électrode formant ainsi du laiton au niveau de ladite électrode.

Sous l'effet des efforts de soudage de l'électrode sur la pièce qui sont de l'ordre de 200 à 230 daN pour des épaisseurs de 0,7 à 1mm, la face active de l'électrode, en contact avec la pièce, s'écrase sur ladite pièce car les caractéristiques mécaniques du laiton sont inférieures à celles de l'alliage.

La surface de contact entre l'électrode et la pièce est alors augmentée.

Ainsi, l'intensité du courant chute ce qui entraîne un développement moindre du noyau fondu à l'interface pièce-pièce et par conséquent une diminution de la durée de vie de l'électrode.

Pour augmenter arbitrairement la durée de vie des électrodes, il est connu d'augmenter l'intensité du courant en fonction du nombre de points réalisés ou de nettoyer l'électrode tous les 250 à 500 points.

Ces solutions ne donnent pas satisfaction car les installations de nettoyage sont complexes et coûteuses et on ne peut nettoyer les électrodes qu'une vingtaine de fois.

Une autre solution connue consiste à revêtir la partie de l'électrode en contact avec au moins une des pièces, d'une couche mince en un matériau conducteur électrique ayant une température de fusion supérieure à 1000°C, comme par exemple le nitrure de titane ou le molybdène.

Mais ce type d'électrodes ne donne pas encore satisfaction car il ne permet pas d'augmenter de manière significative la durée de vie des électrodes comme cela sera montré dans les essais décrits ci-dessous.

La présente invention a pour but d'éviter ces inconvénients en proposant une électrode de soudage par résistance par points dont la durée de vie est considérablement augmentée.

La présente invention a pour objet une électrode de soudage par résistance par points d'au moins deux pièces métalliques par exemple revêtues de zinc ou d'alliage de zinc, comportant une première partie en cuivre ou en alliage de cuivre et une seconde partie, en contact avec au moins une desdites pièces, réalisée en un matériau conducteur électrique ayant une température de fusion supérieure à 1000°C et ne s'alliant pas avec le ou chaque matériau composant lesdites pièces (c'est-à-dire: chimiquement inerte à l'égard du ou de chaque matériau composant lesdites pièces), caractérisée en ce que ladite première partie est soudée par diffusion sur ladite seconde partie.

Selon une caractéristique de l'invention le matériau de la seconde partie est choisi parmi le nitrure de titane ou le molybdène.

Les caractéristiques et avantages de l'invention apparaîtront dans la description qui va suivre, donnée uniquement à titre d'exemple et faite en se référant aux dessins annexés, sur lesquels :
- la Fig. 1 est une vue schématique du soudage de deux pièces métalliques par résistance par points,
- la Fig. 2 est une vue d'une électrode selon l'invention,
- la Fig. 3 est un graphique montrant les résultats des essais effectués avec une électrode nue en cuivre,
- la Fig. 4 est un graphique montrant les résultats des essais effectués avec une électrode selon la présente invention,
- la Fig. 5 est un tableau montrant la durée de vie de différents types d'électrodes en comparaison avec une électrode selon la présente invention.

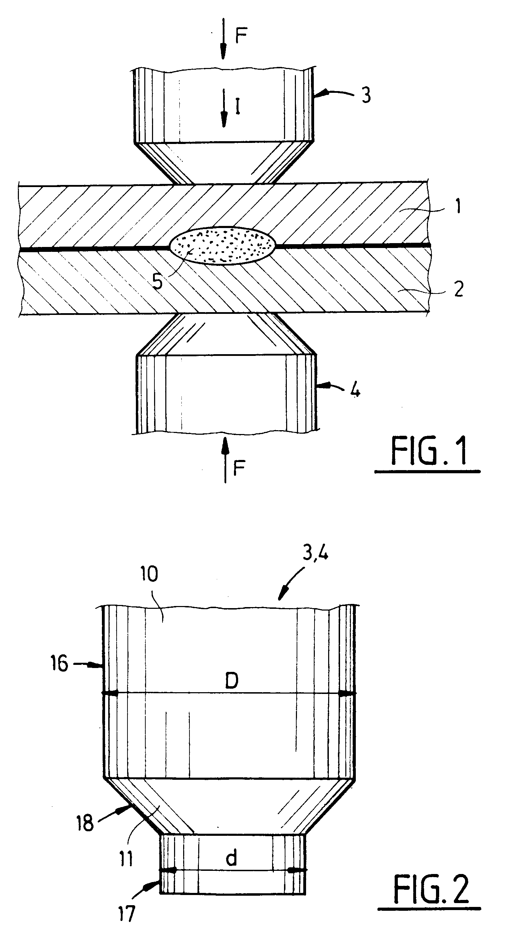

Sur la Fig. 1, on a représenté deux pièces métalliques à souder par exemple revêtues de zinc ou d'alliage de zinc, respectivement 1 et 2, qui sont pressées l'une contre l'autre par un effort F entre deux électrodes, respectivement 3 et 4, dans lesquelles circule un courant I dont l'intensité est de l'ordre de 5 à 30 kA.

Au contact des électrodes 3 et 4 avec les pièces à souder 1 et 2, le courant électrique circulant d'une électrode à l'autre en passant par lesdites pièces, produit, par effet Joule, un échauffement et il se forme à l'interface entre les deux pièces 1 et 2 dans la zone de passage du courant, un noyau fondu 5 qui, après coupure du courant et refroidissement, forme un point de soudure.

L'électrode 3 ou 4 selon la présente invention représentée à la Fig. 2, comporte une première partie 10 en cuivre ou en alliage à base de cuivre, par exemple 0,1% de zirconium, 1% de chrome et 98,9% de cuivre et une seconde partie en pastille 11 réalisée en un matériau conducteur électrique ayant une température de fusion supérieure à 1000°C et chimiquement inerte à l'égard du ou de chaque matériau composant lesdites pièces.

Le matériau de la seconde partie 11 est choisi parmi le nitrure de titane ou le molybdène.

La première partie 10 est soudée par diffusion sur la seconde partie 11 en nitrure de titane ou en molybdène.

Selon un exemple de réalisation, la première partie 10 de l'électrode 3 ou 4 est formée par un cylindre 16 de diamètre D et la seconde partie ou pastille 11 est formée, d'une part, par un cylindre 17 de diamètre inférieur à D et, d'autre part, par un tronc de cône 18 reliant les deux cylindres 16 et 17 entre eux.

Le cylindre 17 est venu de matière avec le tronc de cône 18.

Cette forme tronconique de l'électrode terminée par un cylindre de plus petit diamètre permet, en cas d'usure, d'éviter son augmentation de section.

La seconde partie 11 en nitrure de titane ou en molybdène peut être constituée uniquement par le cylindre 17.

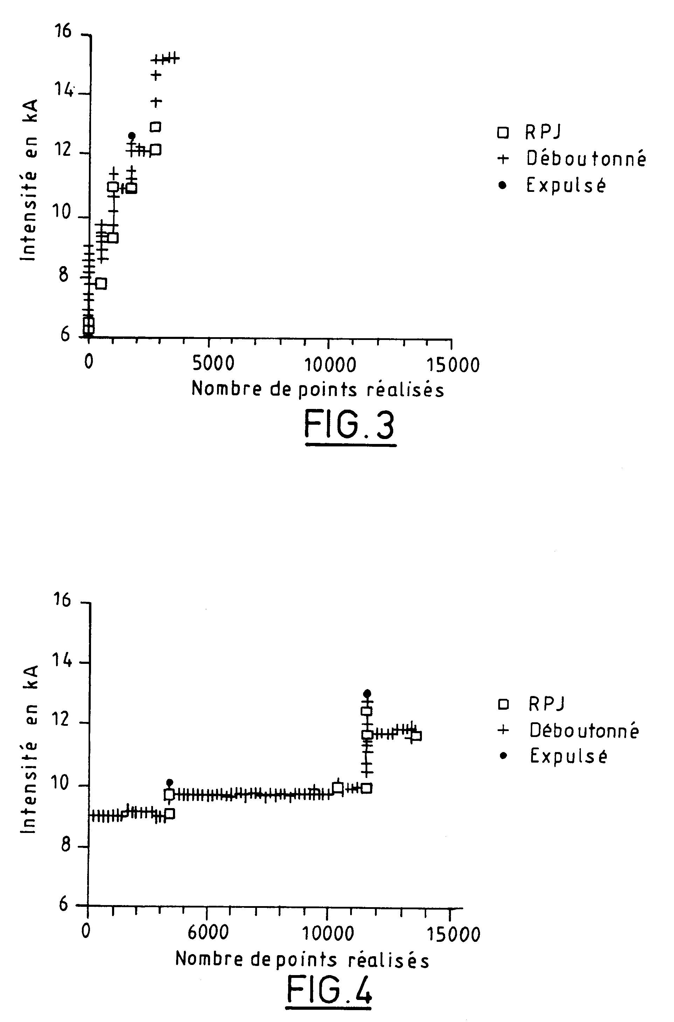

En se reportant maintenant aux Figs. 3 et 4, on va décrire deux essais réalisés, d'une part, avec une électrode nue en cuivre (Fig. 3) et, d'autre part, avec une électrode selon la présente invention, c'est à dire comportant une seconde partie ou pastille en molybdène soudée par diffusion (Fig. 4).

La soudabilité dépend des conditions de préparation et d'utilisation des soudures. Dans le cas du soudage par points, on utilise pour la définir deux types de tests :
- le tracé de la latitude de soudage (tôles nues et revêtues),
- la durée de vie des électrodes (uniquement pour les tôles revêtues).

La latitude de soudage est la différence entre l'intensité minimale qui est l'intensité conduisant à un développement suffisant du noyau fondu, et l'intensité maximale qui est une intensité proche de l'intensité conduisant à une expulsion de métal fondu.

La durée de vie est le nombre d'éprouvettes obtenues par soudage de deux éléments avec un jeu d'électrodes et dont la rupture est satisfaisante.

Pour effectuer les essais, on choisit une intensité et on réalise un point soudé sur une éprouvette.

Ensuite, on teste le point soudé et plusieurs cas peuvent se présenter comme on peut le voir sur les Figs. 3 et 4 :
- si l'intensité est trop faible, il se produit une rupture par le plan de joint (RPJ) et on augmente l'intensité,
- si l'intensité est satisfaisante, il se produit une rupture par déboutonnage du point de soudure,
- si l'intensité est trop forte, une partie de la zone fondue est expulsée du plan de joint et on diminue l'intensité.

Comme représenté sur les Fig. 3 et 4, dès que l'on obtient une rupture par le plan de joint, on augmente l'intensite et on se rend compte qu'avec une électrode nue en cuivre (Fig. 3) le nombre de points réalisés est d'environ 4000 alors qu'avec une électrode munie d'une seconde partie ou pastille en molybdène soudée par diffusion, le nombre de points réalisés est compris entre 12000 et 13000.

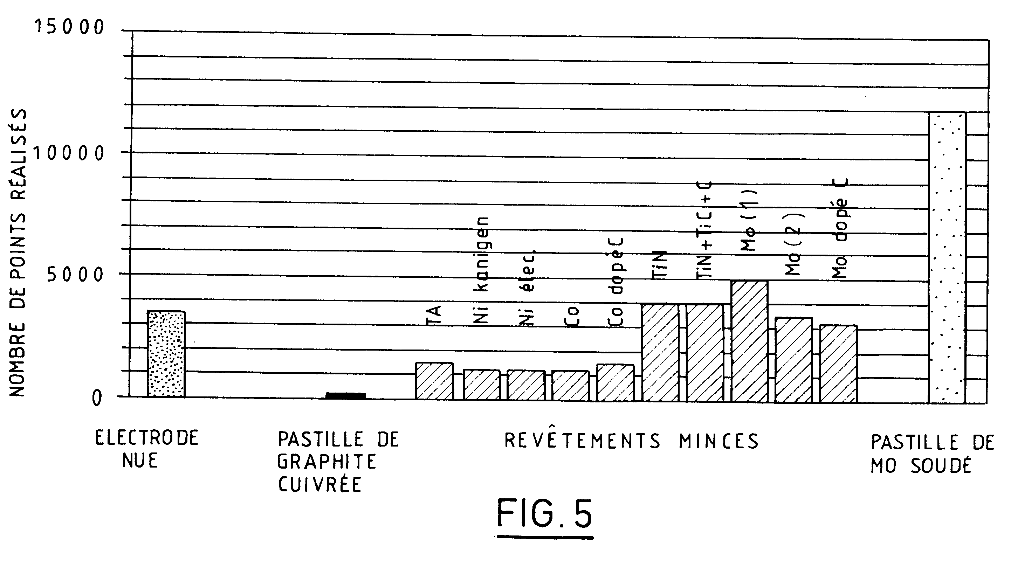

Le tableau de la Fig. 5 montre les résultats d'essais effectués avec une électrode nue, une électrode munie d'une pastille de graphite cuivré, une électrode munie de divers revêtements minces comme par exemple en nitrure de titane ou en molybdène et une électrode munie d'une pastille de molybdène soudée par diffusion selon l'invention.

Ce tableau montre clairement que le fait de souder par diffusion une pastille de molybdène permet d'augmenter considérablement la durée de vie de l'électrode.

Les résultats sont sensiblement identiques avec une pastille de nitrure de titane soudée par diffusion.

## Revendications

1. Electrode (3,4) de soudage par résistance par points d'au moins deux pièces métalliques (1, 2) par exemple revêtues de zinc ou d'alliage de zinc, comportant une première partie (10) en cuivre ou en alliage de cuivre et une seconde partie (11), en contact avec au moins une desdites pièces (1,2), réalisée en un matériau conducteur électrique ayant une température de fusion supérieure à 1000°C et ne s'alliant pas avec le ou chaque matériau composant lesdites pièces (1,2), caractérisée en ce que ladite première partie (10) est soudée par diffusion sur ladite seconde partie (11).

2. Electrode selon la revendication 1, caractérisée en ce que le matériau de la seconde partie (11) est choisi parmi le nitrure de titane ou le molybdène.

## Patentansprüche

1. Widerstandspunktschweißelektrode (3,4) für mindestens zwei Metalltelle (1,2), die beispielsweise mit Zink oder einer Zinklegierung überzogen sind, mit einem ersten Abschnitt (10) aus Kupfer oder einer Kupferlegierung und einem zweiten Abschnitt (11), der mit mindestens einem der genannten Teile (1,2) in Kontakt steht und aus einem elektrisch leitenden Material besteht, das eine Schmelztemperatur besitzt, die über 1000° C liegt, und sich mit dem oder jedem Material, aus dem die beiden Teile (1,2) bestehen, nicht vermischt, dadurch gekennzeichnet, daß der erste Abschnitt (10) an den zweiten Abschnitt (11) diffusionsgeschweißt ist.

2. Widerstandspunktschweißelektrode nach Anspruch 1, dadurch gekennzeichnet, daß das Material des zweiten Abschnitts (11) unter Titannitrid oder Molybdän ausgewählt ist.

## Claims

1. Electrode (3, 4) for resistance spot welding of at least two metal pieces (1, 2) which are, for example, coated with zinc or with zinc alloy, comprising a first part (10) in copper or in copper alloy and a second part (11), in contact with at least one of the said pieces (1, 2), made from an electrically conducting material having a melting point above 1000°C and not alloying with the or each material forming said pieces chemically inert with respect to the material or each material making up the said pieces (1, 2), characterised in that the said first part (10) is diffusion welded onto the said second part (11).

2. Electrode according to Claim 1, characterised in that the material of the second part (11) is chosen from titanium nitride or molybdenum.
